# EUROPEAN PATENT APPLICATION

(11) **EP 1 184 566 A1**
(43) Date of publication of application: **06.03.2002**
(21) Application number: 00929568.4
(22) Date of filing: 26.05.2000
(51) Int. Cl.: F03D 1/06, B64C 27/473, F03D 11/00, H02G 13/00

(54) **AEROGENERATOR BLADE**

(30) Priority: 31.05.1999 ES 9901177
(71) Applicant: Torres Martinez, Manuel, E-31007 Pamplona (ES)
(72) Inventor: Torres Martinez, Manuel, E-31007 Pamplona (ES)
(74) Representative: Evens, Paul Jonathan
(86) International application number: ES0000187
(87) International publication number: WO0073651

(57) **Abstract**

Aerogenerator blade which is formed by assembling one, two or more longitudinal sections, each of which comprises a core formed by a longitudinal carbon-fiber tube (2) on which a series of carbon fiber or fiberglass cross ribs (5) are mounted. A cover is placed on said assembly, which is formed by fiberglass or carbon-fiber housings (6) that are joined by gluing and in relation to the ribs (5) and the tube (2).

## Description

In an aerogenerator, the energy that is obtained is a function of the rotor blade sweeping surface that receives the action from the wind, in such a way that up to now the biggest aerogenerators carried out are from 800 to 1000 kilowatt, which is obtained with some blades of about 30 meters length, i.e. with a sweeping surface in front of the wind of a diameter of about 60 meters.

It is at least very problematic to surpass those measures with the construction of the blades used up to now for the following reasons:
1. - The conventional blades have a construction with an only shell which implies serious difficulties for the transport, since any length bigger than 30 meters forces to the use of special road transport on lorries.
2. - The aerogenerators are generally installed in mountain areas where the difficulty to access increases even more the transport problem.
3. - The conventional blades are being made in glass fibre material, which has a restricted resistance to fatigue and rigidity, conditioning the possibilities of their application to certain limitations.

Everything gives rise to a conditioning that can be denominated "SIZE EFFECT", due to which the glass fibre monoshell blades cannot reach dimensions bigger than those already existing ones, which determines a practically unsurpassable barrier to reach with that shape constructive realizations of aerogenerators with more power than the existing ones.

In a trial to make the use of aerogenerators of up to 5 megawatt feasible, German scientists are studying the possibility to install the needed big aerogenerators in the sea, which eliminates the problem of the road transport, provided the construction is carried out in places which are directly accessible to the sea; but the inconvenience of the dimensional limitations of the blades persists in function of their constructive shape and of the material used.

In accordance with the present invention a blade for aerogenerators is proposed whose constructive realization solves in a satisfactory way the mentioned problems, allowing the construction of blades with a great length with an appropriate resistance to the efforts they have to support and moreover with a composition that allows the division in parts for the normal road transport.

This blade, object of the invention, is formed by a set of adaptable longitudinal tracts, each of which includes a core formed by a carbon fibre tube with steel bushings inserted at the ends for the connections, incorporating in a solidary way on the mentioned pipe a series of traverse ribs of carbon fibre or glass fibre, while on the set some covers of glass fibre or carbon fibre are incorporated, which are glued to one another on the ribs and on the tube, forming a unitary structural set.

This way a multi-shell blade is obtained, formed by tracts of a length that does not require overdimensioned facilities for the construction, being this length moreover appropriate to the effects of the normal transport possibility by lorry, while by means of the corresponding composition, blades can be formed of any longitudinal dimension.

When the blade dimension determines a width at the base that is bigger than the acceptable measures for the normal road transport, the composition is in turn foreseen at the extreme area adjacent to the base of an independent lateral tract that can be disconnected from the rest for the transport.

The shape of the ribs is according to the aerodynamic profile that corresponds to the traverse section of the blades, establishing the union of these ribs with the longitudinal pipe at a point that corresponds to 25 % of their length, i.e. at the point that coincides with the centre of gravity of the aerodynamic profile of the mentioned ribs, so that these do not create torsion on the pipe when the blades are operating.

As there is no torsion, the constructive disposition of the set with the external covers embedded to the longitudinal tube, makes that this longitudinal tube, made of carbon fibre, and therefore very rigid, assumes all the responsibility of the load efforts; while the glass fibre covers, which are very elastic, only assume the effort of the aerodynamic function, having the blades consequently a great resistance to the efforts that have to be supported in their application. The elasticity of the covers is reached in its biggest degree by means of their constructive taping at ± 45° , with which the stretching capacity of the built material is maximum.

In view of all this, this blade, object of the invention, certainly has some very advantageous features that confer it an own life and preferable character regarding the conventional blades used up to now in aerogenerators.
Figure 1 represents an aerogenerator blade according to the object of the invention in perspective.
Figure 2 is an exploded perspective of the same previously mentioned blade.
Figure 3 is a perspective of the longitudinal tube of the blade structure with both details enlarged in section, corresponding to the base end and to the connectable ends of the component tracts.
Figure 4 is a perspective of the mentioned longitudinal blade tube with the traverse ribs incorporated, having extracted in enlarged detail the rib configuration.
Figure 5 is a lateral view of a blade with two tracts according to the object of the invention, having extracted an enlarged detail in section of the connection area of the tracts.
Figure 6 is a lateral view of the same previously mentioned blade with the tracts joined, having extracted an enlarged detail in section of the area of the tract union and in turn a more enlarged detail of the part of correlative union of the covers.
Figure 7 is a view in enlarged representation of the traverse section of the blade according to section VII-VII indicated in the previous figure.
Figure 8 shows a perspective of a blade with three tracts according to the object of the invention.
Figure 9 is a perspective of the same blade of the previous figure, with the component tracts separated.
Figure 10 shows a perspective of a blade with three longitudinal tracts and a fourth lateral tract at the part that corresponds to the extreme area having a greater width.
Figure 11 is a perspective of the same blade of the previous figure, with the component tract separated.

The object of the invention refers to a blade for aerogenerators which is formed by one, two or more successively connectable tracts (1).

Each of the mentioned tract (1) components is structured with a core formed by a longitudinal tube (2) carried out in carbon fibre, with inclusion of some steel bushings (3) and (3.1) solidarily inserted inside and outside into the joining ends, to establish through the interior bushings (3) the fastening between the mentioned tracts (1), while at the end that corresponds to the blade base, the respective tube (2) includes other bushings (4) and (4.1) for the fastening on the respective support in the aerogenerator by means of the external bushing (4.1).

In solidary incorporation on the tube (2) some traverse ribs (5) are also installed, carried out in carbon fibre or glass fibre, these ribs are correlative to the aerodynamic profile of the blade.

The mentioned ribs (5) are situated with regard to the tube (2) in such a way that the latter goes through a point that corresponds to 25 % of the length of the same, with which those ribs (5) remain mounted precisely by fixing through the point that coincides with the centre of gravity of the aerodynamic profile they form.

This way the mentioned ribs (5) do not create torsion on the tube (2) by the effort of the blade originated by its operation, contrary to what happens with the blade used up to now, in which torsion efforts that affect the structure of the blade take place.

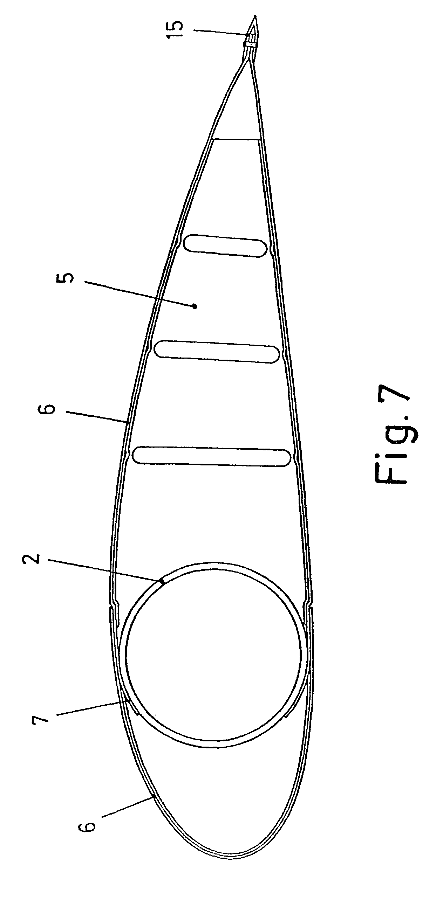

On the set of the tube (2), and the ribs (5) a cover is situated, formed by frames (6) carried out in glass fibre or carbon fibre, which are glued to each other, being in turn glued to the ribs (5) and to the tube (2), as it can be observed in figure 7.

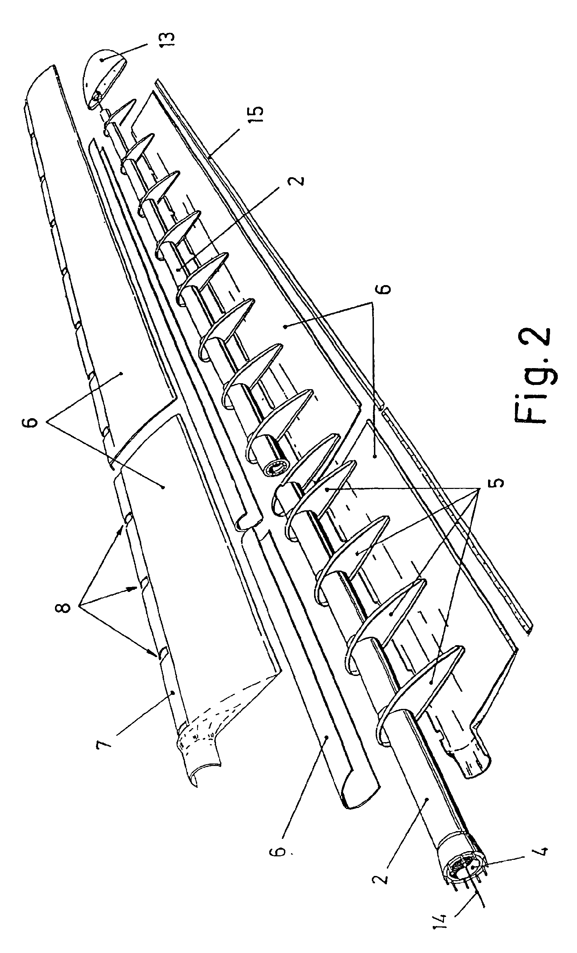

As represented on figure 2, the frames (6) that correspond to the sides determine a conformation (7) in a way corresponding to the contour bending of the tube (2), remaining defined in this conformation (7) some grooves (8) in accordance with the position and the thickness of the ribs (5), so that in the assembly the mentioned lateral frames (6) fit in, remaining embedded to the tube (2) and leaning at the same time on the ribs (5).

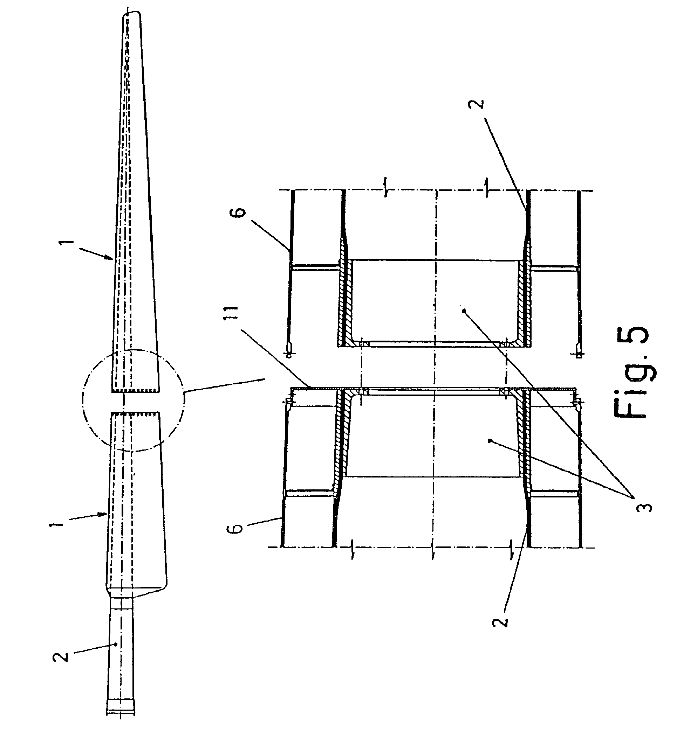

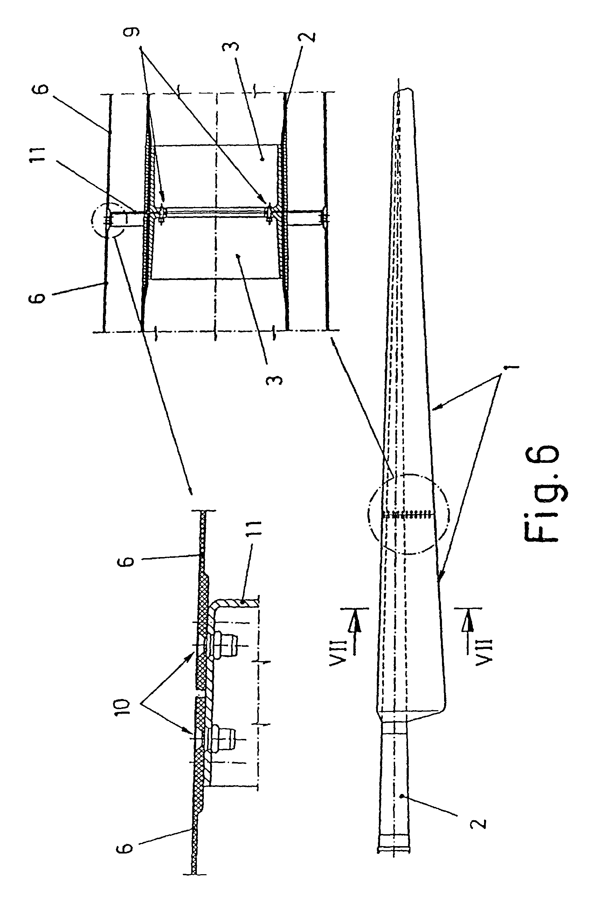

This disposition and the union gluing of all the parts makes that each tract (1) is according to a unitary structural set. The tracts formed this way are joined for the blade composition, by means of fastenings (9) between the bushings (3) included in the tube tracts (2), establishing in turn the union of the respective frames (6) by means of some corresponding fastenings (10) regarding a metallic rib (11) that is included in the connection screwing between the bushings (3) according to what is observed in figures 5 and 6.

This way the blade set is provided with a core with great rigidity, formed by the tube (2) in carbon fibre and with an elastic cover, made up of the glass fibre frames (6), whose constructive realization is also foreseen by means of taping at ± 45° with which a maximum stretching capacity of the formed material is obtained.

The mentioned features of the materials, together with the disposition of the frames (6) leaned on the ribs (5) and embedded to the tube (2) as well as the disposition of the ribs (5) in the assembly, in such a way that no torsion is provoked on the tube (2), make that the blade set behaves in its operating function assuming the tube (2) all the loading effort responsibility, while the frames (6) of the cover are only subjected to the effort of the aerodynamic function, having in consequence the blade a great resistance to the efforts that it has to bear during its application, with possibility of lengths that surpass the possibilities of the conventional blades.

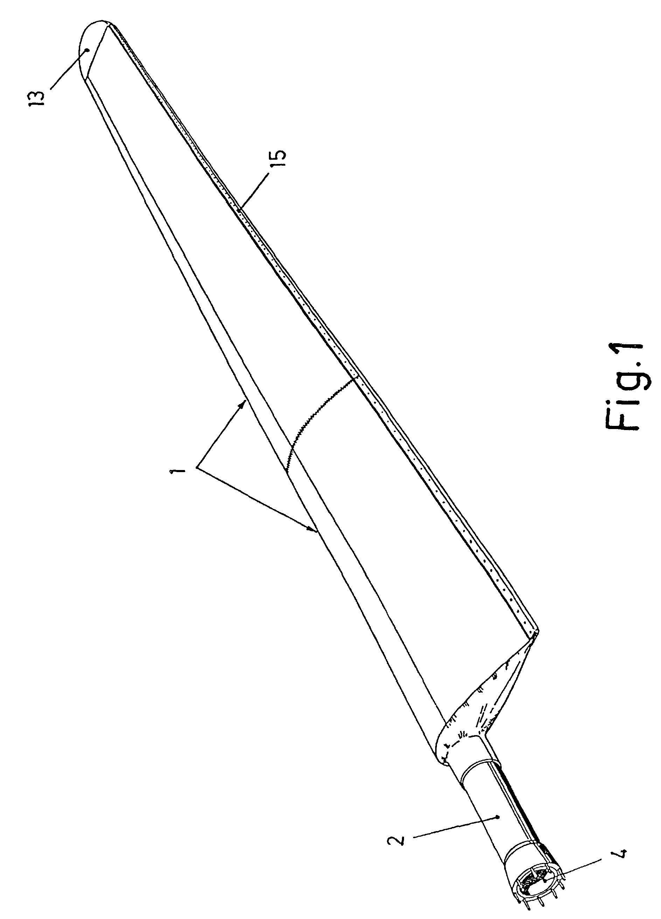

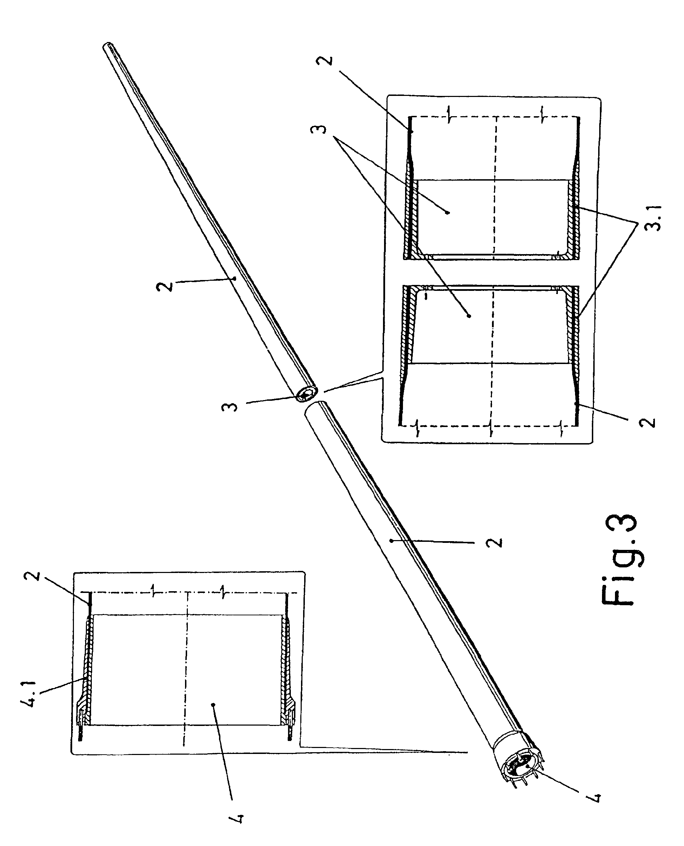

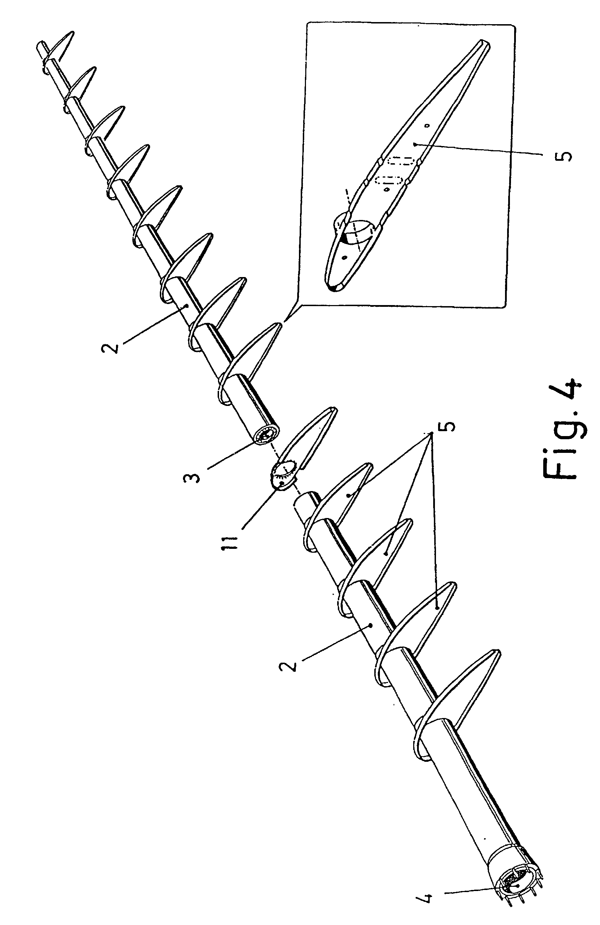

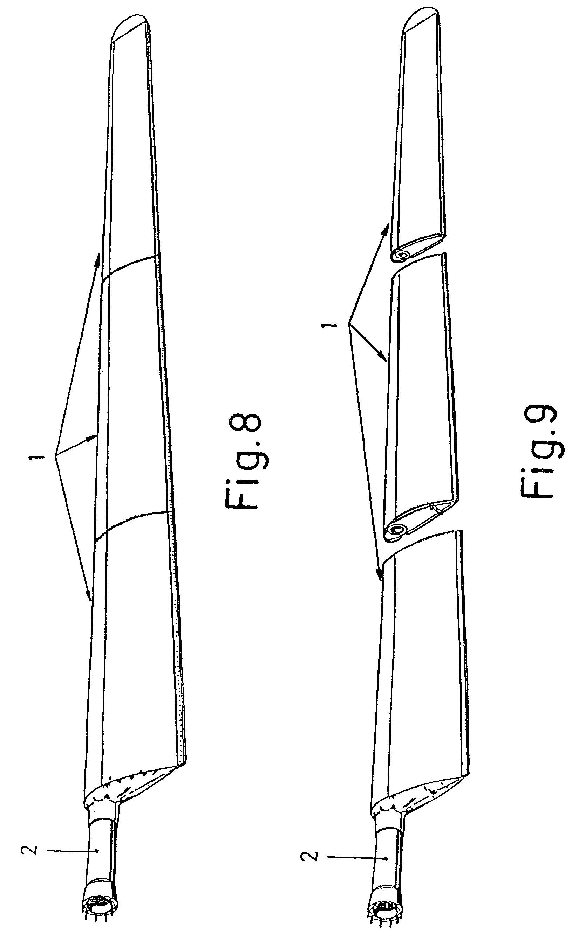

The composition in tracts (1) also allows the dimensional division of the blade into appropriate parts for the normal road transport, so that, for example, for lengths between 35 and 50 meters the composition is carried out in two tracts (1), as the realization of figures 1 to 6, while for lengths between 50 and 65 meters, the composition is carried out at least in three tracts (1), as the realization of figures 8 and 9.

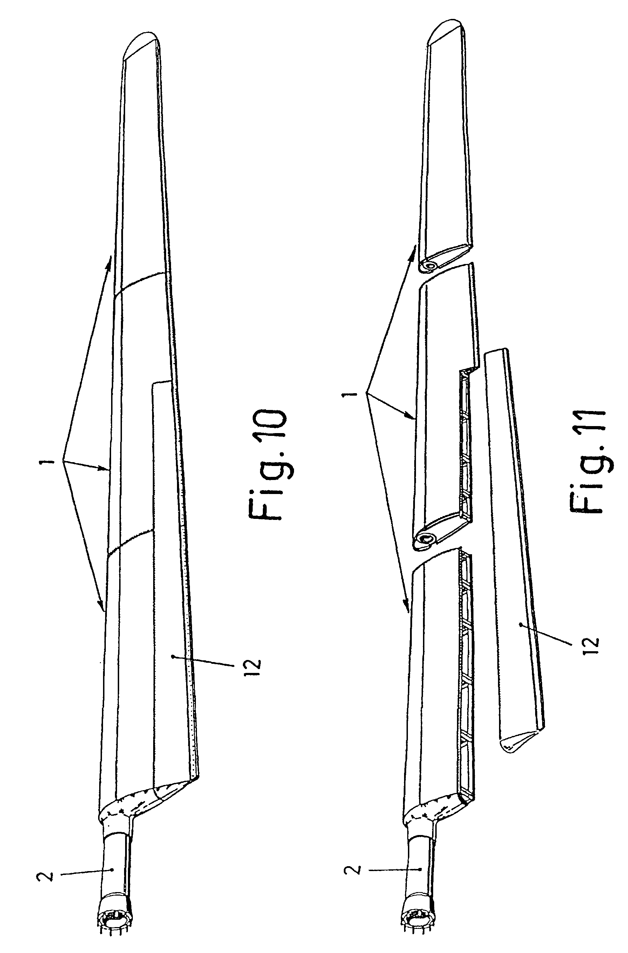

When for the constructive dimension the width of the blade at the extreme area of the base is of a dimension that surpasses the acceptable measures for the normal road transport, this wider part is in turn foreseen to be made up of an independent lateral tract (12), according to figures 10 and 11, so that for the transport this tract (12) can equally be disconnected, so that all the parts are inside the measures for transport under normal conditions.

The blade is finished off at its end with a metal tip (13), to which a conductive cable (14) is included at the inside of the tube (2), so that the metallic tip (13) has the function of a lightning rod, being discharged through the cable (14) to the discharge collector to the earth.

At the narrow blade edge the lateral frames (6) are joined by means of being captured with a metal profile (15), which remains joined at the metal tip (13), so that this profile (15) serves to discharge the static electricity, being at the same time a lightning rod to discharge it through the metal tip (13) and the cable (14) towards the discharge collector to the earth.

## Claims

1. Aerogenerator blade, of the kind comprising a composition of longitudinal tracts successively connectable, **characterized in that** it is formed by a composition of at least two longitudinal tracts (1) each of which includes a core formed by a tube (2) of carbon fibre, on which solidarity a series of traverse ribs (5) of carbon fibre or glass fibre are incorporated, while an external cover formed by frames (6) of glass fibre or carbon fibre is situated over the whole thing being these frames glued to each other and with regard to the ribs (5) and the tube (2).

2. Aerogenerator blade, according to the first claim, **characterized in that** the ribs (5) are situated in the assembly remaining crossed by the tube (2) at a point that corresponds to 25 % of the length of the mentioned ribs (5), coinciding with the centre of gravity of the aerodynamic profile of the same.

3. Aerogenerator blade, according to the first claim, **characterized in that** the frames (6) which form the external cover determine a conformation (7) in correspondence with the peripheral bending of the tube (2), remaining defined in this conformation (7) some grooves (8) in correspondence with the position and the thickness of the ribs (5), so that in the assembly of the mentioned frames (6) they remain inserted and embedded to the tube (2).

4. Aerogenerator blade, according to the first claim, **characterized in that** the tracts of the tube (2) include some steel bushings (3) solidarily inserted, the latter serve as means to establish the fastening between the tracts of the composition of the blade (1) during the assembly union.

5. Aerogenerator blade, according to the first claim, **characterized in that** between the component tracts (1) which form the composition of the blade, a metallic rib (11) is included, on which the fastening of the respective frames (6) of the tracts (1) are situated in the corresponding assembly union.

6. Aerogenerator blade, according to the first up to the fifth claims, **characterized in that** when the widest part of the blade surpasses a certain dimension, the mentioned part is formed including an independent lateral tract (12) that can be disconnected for the transport.

7. Aerogenerator blade, according to the first up to the sixth claims, **characterized in that** at the narrow edge of the aerodynamic profile of the blade the frames (6) are joined by means of being captured with a metallic profile (15), which serves at the same time for the discharge of the static electricity and as a lightning rod.
